# EUROPEAN PATENT APPLICATION

(11) **EP 4 746 141 A1**
(43) Date of publication of application: **20.05.2026**
(21) Application number: 24916642.2
(22) Date of filing: 10.12.2024
(51) Int. Cl.: H01M 50/147, H01M 50/581, H01M 50/152

(54) **TOP COVER ASSEMBLY AND BATTERY**

(30) Priority: 30.08.2024 CN 202422135024 U
(71) Applicant: Eve Energy Co., Ltd., Huizhou, Guangdong 516006 (CN)
(72) Inventor: LIU, Liangliang, Huizhou, Guangdong 516006 (CN); FU, Hongli, Huizhou, Guangdong 516006 (CN); ZHOU, Dahai, Huizhou, Guangdong 516006 (CN); YAN, Lili, Huizhou, Guangdong 516006 (CN); CAO, Lang, Huizhou, Guangdong 516006 (CN)
(74) Representative: Regimbeau
(86) International application number: PCT/CN2024/138053
(87) International publication number: WO 2025/148595

(57) **Abstract**

A top cover assembly includes a cover component and a top cover component. The cover component includes a cover plate and a pole, the cover plate is connected to an opening of a housing, the cover plate is provided with a first through hole, one end of the pole is located on an inner side of the cover plate and is electrically connected to a tab of a cell, and the other end of the pole extends from the first through hole to an outer side of the cover plate. The top cover component includes a first connector, a PTC, and a top cover that are sequentially connected in a direction facing away from the housing, and the first connector is located above the cover plate and is electrically connected to the pole.

## Description

This application claims priority to Chinese Patent Application No. 202422135024.X filed with the China National Intellectual Property Administration on Aug. 30, 2024, the disclosure of which is incorporated herein by reference in its entirety.

### TECHNICAL FIELD

The present application relates to the field of battery technology, for example, a top cover assembly and a battery.

### BACKGROUND

Lithium batteries are widely applied in electronic instruments, digital devices, household appliances, and other fields due to the advantages of high specific energy, low self-discharge, light weight, long service life, and environmental friendliness. A lithium battery typically includes a housing, a cell, and a top cover component. The housing is a shell-like structure with an opening at one end, and an accommodating cavity is provided in the housing. The cell can be placed into the accommodating cavity through the opening of the housing, and the top cover component is sealed at the opening of the housing.

### TECHNICAL PROBLEM

In the related art, the top cover component and the housing are typically assembled in two manners. The first manner is that both the top cover component and the housing are semi-sealed structures, and a positive temperature coefficient (PTC) structure is integrated onto the top cover component, resulting in an excessively large overall sealing area, a poor sealing effect, and relatively low safety. The second manner is that both the top cover component and the housing are fully-sealed structures, and a PTC structure is not integrated onto the top cover component, resulting in the inability to avoid a short circuit of the cell during the assembly process between the top cover component and the housing 10.

### SUMMARY

Embodiments of the present application provide a top cover assembly. The top cover assembly is sealed at an opening of a housing of a battery, and a cell is accommodated within the housing. The top cover assembly includes a cover component and a top cover component.

The cover component includes a cover plate and a pole, where the cover plate is connected to the opening of the housing, the cover plate is provided with a first through hole, one end of the pole is located on an inner side of the cover plate and is electrically connected to a tab of the cell, and the other end of the pole extends from the first through hole to an outer side of the cover plate.

The top cover component includes a first connector, a PTC, and a top cover that are sequentially connected in a direction facing away from the housing; the first connector is located above the cover plate and is electrically connected to the pole.

Embodiments of the present application further provide a battery. The battery includes a housing, a cell, and the preceding top cover assembly, where the housing is a shell-like structure with an opening at one end, the cell is arranged within the housing, the top cover assembly is sealed at the opening of the housing, and the pole of the top cover assembly is electrically connected to the tab of the cell.

### BENEFICIAL EFFECTS

The top cover assembly and the battery that are provided in the present application have a good overcurrent protection function while ensuring the sealing performance of the battery, so as to ensure the safety of the top cover assembly during the assembly process.

### BRIEF DESCRIPTION OF THE DRAWINGS

FIG. 1 is a diagram illustrating the assembly of a top cover and a housing according to an embodiment of the present application.
FIG. 2 is another diagram illustrating the assembly of a top cover and a housing according to an embodiment of the present application.
FIG. 3 is a cross-sectional diagram of a battery according to an embodiment of the present application.
FIG. 4 is a cross-sectional diagram of a top cover assembly according to an embodiment of the present application.
FIG. 5 is a cross-sectional diagram of a top cover component according to an embodiment of the present application.
FIG. 6 is a top view of a top cover according to an embodiment of the present application.
FIG. 7 is a cross-sectional diagram of a top cover according to an embodiment of the present application.
FIG. 8 is a top view of a top cover component according to an embodiment of the present application.
FIG. 9 is a top view of a PTC according to an embodiment of the present application.
FIG. 10 is a cross-sectional diagram of a PTC according to an embodiment of the present application.
FIG. 11 is a top view of a first connector according to an embodiment of the present application.
FIG. 12 is a cross-sectional diagram of a first connector according to an embodiment of the present application.
FIG. 13 is a cross-sectional diagram of a cover component according to an embodiment of the present application.
FIG. 14 is a diagram illustrating the structures of components of a cover component before assembly according to an embodiment of the present application.

### Reference list

- 10': housing
- 101': mounting groove
- 20': top cover component
- 201': top cover
- 202': bottom cover
- 203': PTC
- 30': cell
- 301': tab
- 10": housing
- 20": top cover component
- 201": cover
- 2011": first through hole
- 202": pole
- 203": insulator
- 204": sealing member
- 30": cell
- 301": tab
- 100: top cover assembly
- 110: cover component
- 111: cover plate
- 1111: first through hole
- 112: pole
- 1121: pole body
- 11211: first protrusion
- 1122: protrusion portion
- 113: second connector
- 1131: second through hole
- 1132: engagement portion
- 1133: second slot
- 114: insulator
- 1141: accommodating groove
- 1142: second protrusion
- 11401: bearing portion
- 11402: intermediate connection portion
- 11403: inner extension portion
- 120: top cover component
- 121: first connector
- 1211: first positioning portion
- 1212: first via
- 122: PTC
- 1221: second positioning portion
- 1222: first avoidance spot-welding position
- 1223: second via
- 123: top cover
- 1231: recessed portion
- 1232: third positioning portion
- 1233: second avoidance spot-welding position
- 130: sealed portion
- 131: limiting groove
- 200: housing
- 300: cell
- 301: tab

### DETAILED DESCRIPTION

In the related art, a top cover component and a housing are typically assembled in the following two manners.

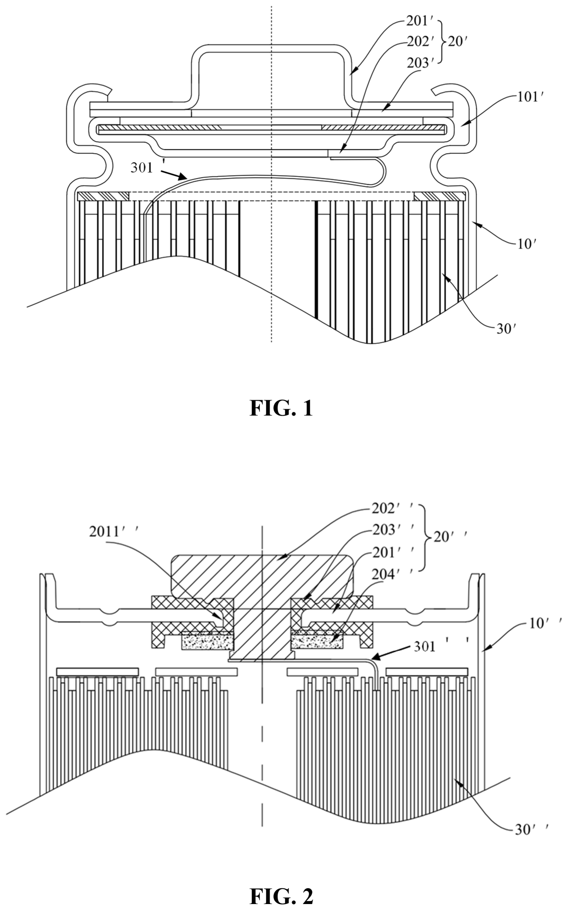

1) As shown in FIG. 1, both the top cover component 20' and the housing 10' are semi-sealed structures, the top cover component 20' includes a top cover 201', a bottom cover 202', and a PTC structure 203', and the inner wall at an opening of the housing 10' is formed with a mounting groove 101'. The bottom cover 202', the PTC structure 203', and the top cover 201' are arranged sequentially from the inside to the outside and are all accommodated in the mounting groove 101'. The bottom cover 202' is electrically connected to a tab 301' of a cell 30' in the housing 10'. The arrangement of the PTC structure 203' can avoid a short circuit of the cell during the assembly process of the top cover component 20' and the housing 10', so as to ensure the safety in the assembly process of the top cover component 20' and the housing 10'. However, this arrangement requires sealing between the top cover component 20' and the mounting groove 101', which results in an excessively large overall sealing area, a poor sealing effect, and relatively low safety.

2) As shown in FIG. 2, both the top cover component 20" and the housing 10" are fully-sealed structures, the top cover component 20" includes a cover 201", a pole 202", and an insulator 203", the cover 201" is welded to an opening of the housing 10", the cover 201" is provided with a first through hole 2011", one end of the pole 202" is located on an outer side of the cover 201", and the other end of the pole 202" penetrates through the first through hole 2011" to be electrically connected to a tab 301" of a cell 30" in the housing 10"; the insulator 203" is arranged between the cover 201" and the pole 202" to enable an insulation connection between the cover 201" and the pole 202"; a sealing member 204" is arranged between the insulator 203" and the pole 202". Compared with the first assembly manner, this assembly structure has a greatly reduced sealing area and improved sealing performance. However, since a PTC structure is not integrated onto the top cover component 20", a short circuit of the cell cannot be avoided during the assembly process between the top cover component 20" and the housing 10"; this assembly structure requires an additional PTC connection during assembly, resulting in a relatively complex overall structure, making it difficult to achieve automated mass production, and leading to increased manufacturing costs.

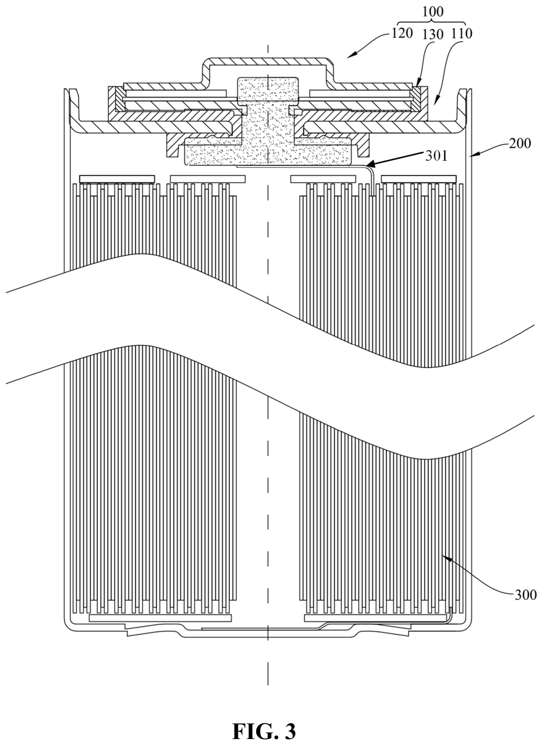

FIG. 3 is a cross-sectional diagram of a battery according to this embodiment. As shown in FIG. 3, this embodiment provides a battery. The battery includes a housing 200, a cell 300, and a top cover assembly 100. The housing 200 is a shell-like structure with an opening at one end, the cell 300 is arranged in the housing 200, and the top cover assembly 100 is sealed at the opening of the housing 200 to ensure the sealing of the battery. In this embodiment, the battery is a cylindrical battery, the housing 200 is a cylindrical cavity structure with an opening at one end, and the cell 300 is placed into the inner cavity of the housing 200 from the opening of the housing 200.

In this embodiment, the cell 300 is a wound cell, which has the advantages of a compact structure, a strong charge and discharge capability, and a high reliability.

It should be noted that the specific structure of the housing 200 is not limited in this embodiment.

To ensure the sealing of the battery and the safety during the assembly process, this embodiment further provides a top cover assembly 100. The specific structure of the top cover assembly 100 is described below in conjunction with the drawings.

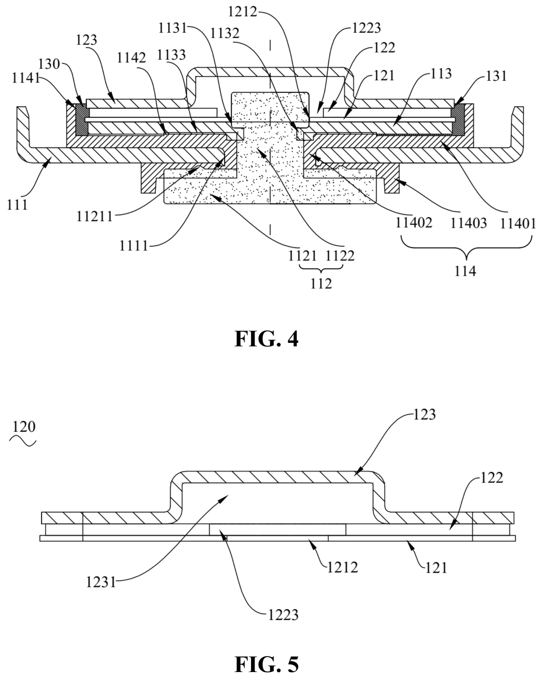

FIG. 4 is a cross-sectional diagram of the top cover assembly 100 according to this embodiment. As shown in FIG. 4 and in conjunction with FIG. 3, the top cover assembly 100 provided in this embodiment includes a cover component 110 and a top cover component 120. The cover component 110 includes a cover plate 111 and a pole 112, the cover plate 111 is connected to the opening of the housing 200, the cover plate 111 is provided with a first through hole 1111, one end of the pole 112 is located on an inner side of the cover plate 111 and is electrically connected to a tab 301 of the cell 300, and the other end of the pole 112 extends from the first through hole 1111 to an outer side of the cover plate 111. The top cover component 120 includes a first connector 121, a PTC 122, and a top cover 123 that are sequentially connected in a direction facing away from the housing 200, and the first connector 121 is located above the cover plate 111 and is electrically connected to the pole 112. With this arrangement, the top cover assembly 100 can be connected to the opening of the housing 200 in a manner of a fully-sealed structure to ensure that the battery has good sealing performance; the integration of the PTC 122 can play an overcurrent protection role during the assembly process of the top cover assembly 100, thereby ensuring the safety and reliability of the assembly process of the top cover assembly 100. It should be noted that the PTC 122 refers to a positive temperature coefficient thermistor. The integration of the PTC 122 into the top cover assembly 100 can play the following roles: 1) overheat protection: when the battery heats up due to overcharging, a short circuit, or other abnormal conditions, the resistance of the PTC 122 increases rapidly, thereby limiting a current, preventing the internal temperature of the battery from being too high, and enabling overheat protection of the battery; 2) overcurrent protection: when a current in the battery circuit exceeds a set value, the PTC 122 heats up and causes the resistance to increase, thereby limiting the current and preventing the battery from being damaged due to overcurrent. Therefore, the top cover assembly 100 provided in this embodiment can monitor and protect the operating state of the battery in real-time, thereby improving the safety and service life of the battery.

It should be noted that the outer side of the cover plate 111 specifically refers to the side of the cover plate 111 facing away from the cell 300, and the inner side of the cover plate 111 specifically refers to the side of the cover plate 111 facing the cell 300.

As shown in FIG. 4, the pole 112 includes a pole body 1121 and a protrusion portion 1122 protruding from the pole body 1121. The pole body 1121 is located on the inner side of the cover plate 111 and is electrically connected to the tab 301 of the cell 300. The outer diameter of the pole body 1121 is larger than the inner diameter of the first through hole 1111. The protrusion portion 1122 extends from the first through hole 1111 to the outer side of the cover plate 111. With this arrangement, the pole 112 can form a structure similar to a stepped shaft, and the step surface formed between the pole body 1121 and the protrusion portion 1122 can engage with the cover plate 111 in a snap-fit manner to prevent the pole 112 from coming out of the first through hole 1111 of the cover plate 111 under a large external force, thereby ensuring the reliability of the battery. In this embodiment, the pole 112 is made of aluminum alloy or stainless steel.

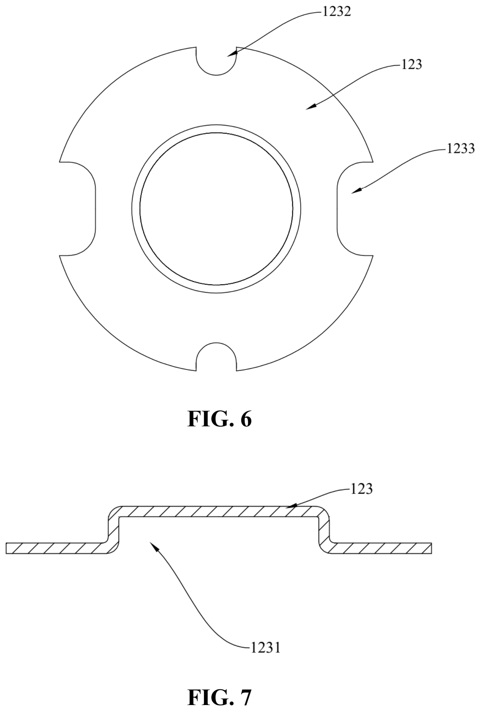

FIG. 5 is a cross-sectional diagram of the top cover component 120 according to this embodiment. FIG. 6 is a top view of the top cover 123 according to this embodiment. FIG. 7 is a cross-sectional diagram of the top cover 123 according to this embodiment. As shown in FIGS. 5 to 7 and in conjunction with FIGS. 3 and 4, the top cover 123 is provided with a recessed portion 1231 recessed in the direction facing away from the housing 200, the recessed portion 1231 is arranged directly opposite to the first through hole 1111, the first connector 121 is provided with a first via 1212 directly opposite to the first through hole 1111, the PTC 122 is provided with a second via 1223 directly opposite to the first through hole 1111, and the other end of the pole 112 extending out of the first through hole 1111 penetrates through the first via 1212 and the second via 1223 sequentially and is accommodated in the recessed portion 1231. This design can protect the pole 112 to avoid damage to the pole 112 due to a long-term exposure and can improve the reliability of the battery in use.

In some embodiments, a gap exists between the hole wall of the second via hole 1223 on the PTC 122 and the outer wall of the pole 112. This design is to enable the PTC 122 to play a better role in overcurrent protection. It should be explained that the overcurrent protection principle of the PTC 122 is that under normal operating conditions, the temperature of the PTC 122 is low, and the resistance value of the PTC 122 is relatively small, so the current can pass smoothly; when the current in the circuit exceeds a rated value, the power consumption generated when the current passes through the PTC 122 increases, causing the temperature of the PTC 122 to rise rapidly, and since the PTC 122 has a positive temperature coefficient characteristic, that is, as the temperature rises, the resistance value also increases accordingly, in the overcurrent state, the resistance value of the PTC 122 increases rapidly. In this case, a current passing through the PTC 122 is limited and reduced, so the PTC 122 can play the role of overcurrent protection. Therefore, the PTC 122 needs to be connected to the circuit. If the PTC 122 is in direct contact with the pole 112, a current on the pole 112 flows directly from the top surface of the PTC 122 to the top cover 123 without passing through the interior of the PTC 122. In this case, the PTC 122 cannot play the role of overcurrent protection.

In this embodiment, the first connector 121, the PTC 122, and the top cover 123 are welded, which is convenient for assembly and has a stable connection.

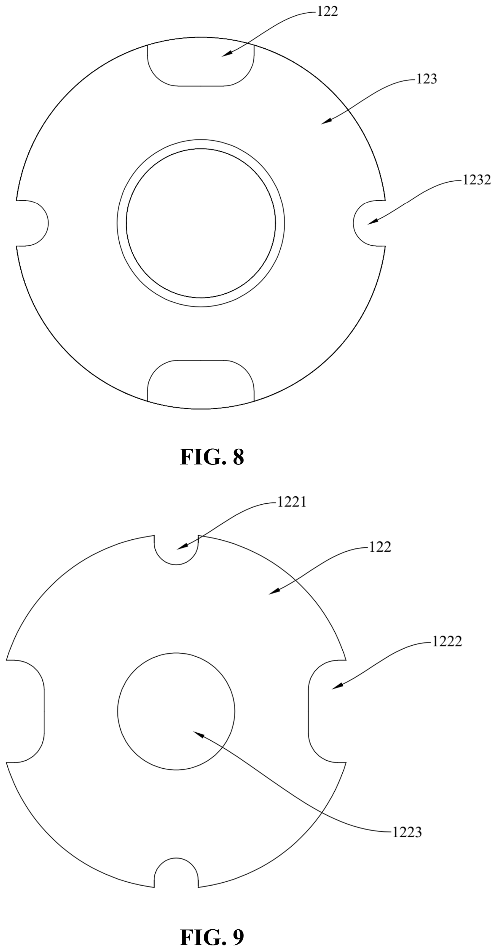

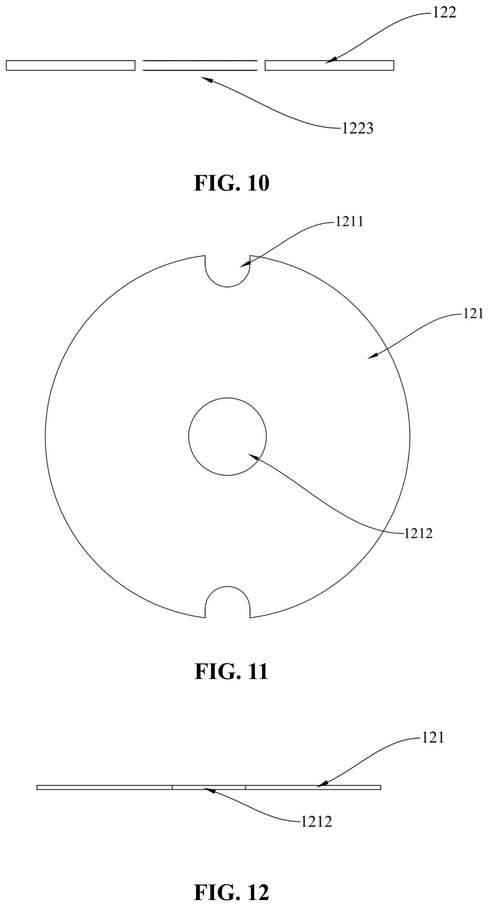

FIG. 8 is a top view of the top cover component 120 according to this embodiment. FIG. 9 is a top view of the PTC 122 according to this embodiment. FIG. 10 is a cross-sectional diagram of the PTC 122 according to this embodiment. FIG. 11 is a top view of the first connector 121 according to this embodiment. FIG. 12 is a cross-sectional diagram of the first connector 121 according to this embodiment. As shown in FIGS. 8 to 12 and in conjunction with FIG. 6, to enable the secure welding between the first connector 121, the PTC 122, and the top cover 123, the first connector 121 is provided with a first positioning portion 1211, the PTC 122 is provided with a second positioning portion 1221, and the top cover 123 is provided with a third positioning portion 1232, and the first positioning portion 1211, the second positioning portion 1221, and the third positioning portion 1232 are arranged directly opposite to each other. Before welding, the first connector 121, the PTC 122, and the top cover 123 are stacked sequentially; the first positioning portion 1211, the second positioning portion 1221, and the third positioning portion 1232 are ensured to be arranged directly opposite to each other; the first connector 121, the PTC 122, and the top cover 123 are connected by soldering at the first positioning portion 1211, the second positioning portion 1221, and the third positioning portion 1232.

In some embodiments, the first positioning portion 1211, the second positioning portion 1221, and the third positioning portion 1232 are all positioning grooves formed at the edges of corresponding structures. In some other embodiments, the first positioning portion 1211, the second positioning portion 1221, and the third positioning portion 1232 are all positioning holes opened on corresponding structures. The specific shapes of the first positioning portion 1211, the second positioning portion 1221, and the third positioning portion 1232 are not limited in this embodiment. The first positioning portion 1211, the second positioning portion 1221, and the third positioning portion 1232 may be circular, semicircular, square, or other irregular shapes, as long as the first connector 121, the PTC 122, and the top cover 123 can be securely welded.

In this embodiment, two first positioning portions 1211 are provided. The two first positioning portions 1211 are symmetrically arranged on the first connector 121, and each first positioning portion 1211 corresponds to one second positioning portion 1221 and one third positioning portion 1232, that is, there are two welded connection positions among the first connector 121, the PTC 122, and the top cover 123 to ensure the stability of the connection between the first connector 121, the PTC 122, and the top cover 123. Certainly, in other embodiments, the number of first positioning portions 1211, the number of second positioning portions 1221, and the number of third positioning portions 1232 may also be adjusted according to actual requirements, which is not limited herein.

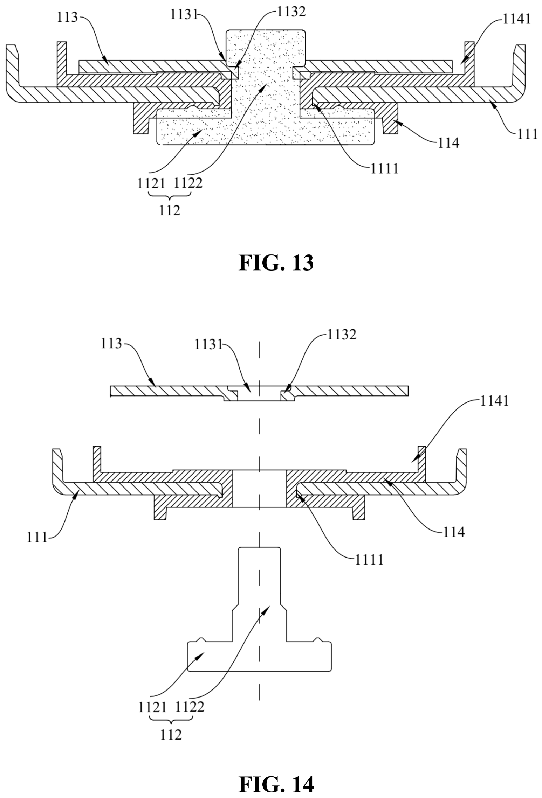

FIG. 13 is a cross-sectional diagram of the cover component 110 according to this embodiment. FIG. 14 is a diagram illustrating the structures of components of the cover component 110 before assembly according to this embodiment. As shown in FIGS. 13 and 14, the cover component 110 further includes a second connector 113. The second connector 113 is located above the cover plate 111, and the second connector 113 is provided with a second through hole 1131 directly opposite to the first through hole 1111, and one end of the pole 112 facing away from the housing 200 penetrates through the first through hole 1111 and the second through hole 1131 sequentially; an engagement portion 1132 is formed by protruding from the hole wall of the second through hole 1131 toward the center of the second through hole 1131, the engagement portion 1132 is snap-fitted into the pole 112, and the first connector 121 is connected to the second connector 113. The second connector 113 is provided so that the second connector 113 can engage with the pole 112 in a snap-fit manner through the engagement portion 1132. For the first aspect, the pole 112 can be secured to prevent the pole 112 from coming off the cover plate 111 during use and affecting the usage performance of the battery. For the second aspect, the pole 112 can be stably and electrically connected to the second connector 113. For the third aspect, good sealing can also be ensured between the second connector 113 and the pole 112. In some embodiments, the second connector 113 is made of stainless steel.

To enable an insulation connection between the pole 112 and the cover plate 111, the cover component 110 further includes an insulator 114. The insulator 114 is arranged between the cover plate 111 and the pole 112 and between the second connector 113 and the cover plate 111.

In some embodiments, along the axial direction of the pole 112, the distance from one surface of the engagement portion 1132 facing away from the housing 200 to the cover plate 111 is smaller than the distance from one surface of the second connector 113 facing away from the housing 200 to the cover plate 111. With this arrangement, a step structure can be formed in the second through hole 1131. The step structure squeezes the pole 112 along the radial direction of the pole 112 and squeezes the insulator 114 along the axial direction of the pole 112, thereby forming good insulation and sealing between the pole 112 and the cover plate 111.

To electrically connect the first connector 121 to the second connector 113, as shown in FIGS. 8 and 10, the first connector 121 is welded to the second connector 113, the PTC 122 is provided with a first avoidance spot-welding position 1222, the top cover 123 is provided with a second avoidance spot-welding position 1233, and the first avoidance spot-welding position 1222 and the second avoidance spot-welding position 1233 are both directly opposite to a welded position between the first connector 121 and the second connector 113. The arrangement of the first avoidance spot-welding position 1222 and the second avoidance spot-welding position 1233 can avoid the interference with the welded position between the first connector 121 and the second connector 113, so as to ensure the stable connection between the first connector 121 and the second connector 113. As the intermediate connection structure between the cover component 110 and the top cover component 120, the first connector 121 can ensure the welding quality and connection stability between the cover component 110 and the top cover component 120.

In this embodiment, two first avoidance spot-welding positions 1222 are provided. The two first avoidance spot-welding positions 1222 are symmetrically distributed on the PTC 122, one first avoidance spot-welding position 1222 is arranged between two adjacent second positioning portions 1221, and each first avoidance spot-welding position 1222 corresponds to one second avoidance spot-welding position 1233. In other words, there are two welded connection positions between the first connector 121 and the second connector 113 to ensure the stability of the connection between the first connector 121 and the second connector 113. Certainly, in other embodiments, the number and arrangement of first avoidance spot-welding positions 1222 and the number and arrangement of second avoidance spot-welding positions 1233 may also be adjusted according to the actual requirements, and are not limited herein.

With continued reference to FIG. 4, one side of the insulator 114 facing away from the housing 200 is formed with an accommodating groove 1141. The second connector 113, the first connector 121, the PTC 122, and a portion of the top cover 123 are all located in the accommodating groove 1141, and a sealed portion 130 is provided between the groove wall of the accommodating groove 1141 and each of the outer edge of the second connector 113, the outer edge of the first connector 121, the outer edge of the PTC 122, and the outer edge of the portion of the top cover 123. When the top cover assembly 100 is processed, the cover component 110 and the top cover component 120 may be assembled separately first, and then the first via 1212 of the first connector 121 on the top cover component 120 and the second via 1223 of the PTC 122 on the top cover component 120 are aligned with the pole 112 and mounted in the accommodating groove 1141 of the insulator 114. Afterward, the first connector 121 is welded to the second connector 113 through the first avoidance spot-welding positions 1222 and the second avoidance spot-welding positions 1233. Finally, glue sealing treatment is performed between the accommodating groove 1141 and the top cover component 120 to form the sealed portion 130. Compared with the semi-sealed structure shown in FIG. 1, the top cover assembly 100 provided in this embodiment has a small sealing area, which can enable a good sealing effect. Moreover, since the PTC 122 is integrated at the same time, the overcurrent protection function of the top cover assembly 100 during the assembly process can be fulfilled, thereby improving the safety of the battery.

In some embodiments, the top on one side of the sealed portion 130 facing the central axis of the first through hole 1111 is formed with a limiting groove 131, and an edge portion of the top cover 123 is limited in the limiting groove 131. The arrangement of the sealed portion 130 can connect the outer edge of the cover component 110 to the groove wall of the accommodating groove 1141, thereby connecting the cover component 110 to the top cover component 120.

In some embodiments, an edge portion of the PTC 122 is inserted into the sealed portion 130 to enable the engagement between the PTC 122 and the sealed portion 130 in a snap-fit manner, further improving the stable securing of the PTC 122.

With continued reference to FIG. 4, the insulator 114 includes a bearing portion 11401 and an intermediate connection portion 11402 that are connected sequentially. The bearing portion 11401 is located on the outer side of the cover plate 111, the accommodating groove 1141 is formed on the bearing portion 11401, and the intermediate connection portion 11402 is located between the hole wall of the first through hole 1111 and the protrusion portion 1122. This design can enable a complete insulation connection between the pole 112 and the cover plate 111, with a good insulation effect, which can improve the safety of the battery in use.

In some embodiments, the insulator 114 further includes an inner extension portion 11403. The inner extension portion 11403 is located on the inner side of the cover plate 111 and between the pole body 1121 and the cover plate 111, and the inner extension portion 11403 is connected to one end of the intermediate connection portion 11402 facing away from the bearing portion 11401, thereby enabling an insulation connection between the upper surface of the pole body 1121 and the cover plate 111 and further improving the safety of the battery in use. In this embodiment, the cross section of the inner extension portion 11403 is L-shaped to form an accommodating groove for accommodating the pole body 1121.

In some embodiments, the pole body 1121 is further provided with a first protrusion 11211, and the inner extension portion 11403 is formed with a first slot engaging with the first protrusion 11211. The first protrusion 11211 engages with the first slot in a snap-fit manner so that the stable connection between the insulator 114 and the pole 112 can be further improved. In some embodiments, in this embodiment, the first protrusion 11211 is an annular protrusion, and the first slot is an annular slot, which facilitate processing and assembly. Certainly, in other embodiments, multiple first protrusions 11211 are provided and are spaced apart along the circumferential direction of the pole body 1121, and each first protrusion 11211 corresponds to one respective first slot in a sealable way. This design can also achieve the effect of convenient processing and assembly. In this example, when each first protrusion 11211 is inserted into the respective first slot, the relative positions between the pole 112 and the insulator 114 are secured, and relative rotation is not easy to occur.

In some embodiments, one side of the insulator 114 facing the second connector 113 is provided with a second protrusion 1142, and the second connector 113 is formed with a second slot 1133 engaging with the second protrusion 1142. The second protrusion 1142 engages with the second slot 1133 in a snap-fit manner so that the stable connection between the insulator 114 and the second connector 113 can be further improved. In some embodiments, in this embodiment, the second protrusion 1142 is an annular protrusion, and the second slot 1133 is an annular slot, which facilitate processing and assembly. Certainly, in other embodiments, multiple second protrusions 1142 are provided and are spaced apart along the circumferential direction of the insulator 114, and each second protrusion 1142 corresponds to one respective second slot 1133. This design can also achieve the effect of convenient processing and assembly. In this example, when each second protrusion 1142 is inserted into the respective second slot 1133, the relative positions between the insulator 114 and the second connector 113 are secured, and relative rotation is not easy to occur.

The assembly process of the battery is briefly described below in conjunction with FIGS. 3 to 14.
1) Assembly of the top cover component 120: the first connector 121, the PTC 122, and the top cover 123 are stacked sequentially; the first positioning portions 1211, the second positioning portions 1221, and the third positioning portions 1232 are ensured to be arranged directly opposite to each other; the first connector 121, the PTC 122, and the top cover 123 are connected by soldering at the first positioning portions 1211, the second positioning portions 1221, and the third positioning portions 1232.
2) Assembly of the cover component 110: the insulator 114 is formed on the cover plate 111 by injection molding, and the protrusion portion 1122 of the pole 112 penetrates through the first through hole 1111 and the second through hole 1131 sequentially; the engagement portion 1132 in the second through hole 1131 squeezes the protrusion portion 1122, and the engagement portion 1132 and the protrusion portion 1122 squeeze the insulator 114 so that the good insulation and sealing are formed between the pole 112 and the cover plate 111.
3) Assembly of the top cover component 120 and the cover component 110: the first via 1212 of the first connector 121 on the top cover component 120 and the second via 1223 of the PTC 122 on the top cover component 120 are aligned with the pole 112 and mounted in the accommodating groove 1141 of the insulator 114; afterward, the first connector 121 is welded to the second connector 113 through the first avoidance spot-welding positions 1222 and the second avoidance spot-welding positions 1233; finally, the glue sealing treatment is performed between the accommodating groove 1141 and the top cover component 120 to form the sealed portion 130.
4) Assembly of the battery: a positive electrode sheet, a separator, and a negative electrode sheet are sequentially stacked and wound into a cylindrical-like core structure; a negative electrode end of the core structure is connected to a negative insulation sheet, the core structure is then placed into the cavity of the housing 200, and a negative tab is connected to the bottom of the housing 200 by resistance welding; a positive electrode end of the core structure is connected to a positive insulation sheet, a positive tab is connected to the pole 112 of the top cover assembly 100 by laser welding, and an electrolyte is injected into the housing 200; the cover plate 111 of the top cover assembly 100 is connected to the opening of the housing 200 by laser welding.

It should be explained that the first connector 121 is made of nickel-plated metal, and the outflow path of the current is: the tab 301→the pole 112→the second connector 113→the first connector 121→the PTC 122→the top cover 123.

## Claims

1. A top cover assembly, sealed at an opening of a housing (200) of a battery, wherein a cell (300) is accommodated within the housing (200), and the top cover assembly comprises:
a cover component (110) comprising a cover plate (111) and a pole (112), wherein the cover plate (111) is connected to the opening of the housing (200), the cover plate (111) is provided with a first through hole (1111), one end of the pole (112) is located on an inner side of the cover plate (111) and is electrically connected to a tab (301) of the cell (300), and the other end of the pole (112) extends from the first through hole (1111) to an outer side of the cover plate (111); and
a top cover component (120) comprising a first connector (121), a positive temperature coefficient thermistor (PTC) (122), and a top cover (123) that are sequentially connected in a direction facing away from the housing (200); the first connector (121) is located above the cover plate (111) and is electrically connected to the pole (112).

2. The top cover assembly of claim 1, wherein the top cover (123) is provided with a recessed portion (1231) recessed in the direction facing away from the housing (200), the recessed portion (1231) is arranged directly opposite to the first through hole (1111), the first connector (121) is provided with a first via (1212) directly opposite to the first through hole (1111), the PTC (122) is provided with a second via (1223) directly opposite to the first through hole (1111), and the other end of the pole (112) extending out of the first through hole (1111) is configured to penetrate through the first via (1212) and the second via (1223) sequentially and is accommodated in the recessed portion (1231).

3. The top cover assembly of claim 1 or 2, wherein a gap exists between a hole wall of a second via (1223) on the PTC (122) and an outer wall of the pole (112).

4. The top cover assembly of claim 1 or 2, wherein the cover component (110) further comprises a second connector (113), the second connector (113) is located above the cover plate (111), the second connector (113) is provided with a second through hole (1131) directly opposite to the first through hole (1111), and one end of the pole (112) facing away from the housing (200) is configured to penetrate through the first through hole (1111) and the second through hole (1131) sequentially.

5. The top cover assembly of claim 4, wherein an engagement portion (1132) is formed by protruding from a hole wall of the second through hole (1131) toward a center of the second through hole (1131), the engagement portion (1132) is snap-fitted into the pole (112), and the first connector (121) is connected to the second connector (113).

6. The top cover assembly of claim 5, wherein along an axial direction of the pole (112), a distance from one surface of the engagement portion (1132) facing away from the housing (200) to the cover plate (111) is smaller than a distance from one surface of the second connector (113) facing away from the housing (200) to the cover plate (111).

7. The top cover assembly of claim 4, wherein the pole (112) comprises a pole body (1121) and a protrusion portion (1122) protruding from the pole body (1121), the pole body (1121) is located on the inner side of the cover plate (111) and is electrically connected to the tab (301) of the cell (300), an outer diameter of the pole body (1121) is larger than an inner diameter of the first through hole (1111), and the protrusion portion (1122) is configured to penetrate through the first through hole (1111) and the second through hole (1131) sequentially and extend to the outer side of the cover plate (111).

8. The top cover assembly of any one of claims 5 to 7, wherein the cover component (110) further comprises an insulator (114), the cover plate (111) is insulated from the pole (112) through the insulator (114), and the second connector (113) is insulated from the cover plate (111) through the insulator (114).

9. The top cover assembly of claim 8, wherein one side of the insulator (114) facing away from the housing (200) is formed with an accommodating groove (1141), the second connector (113), the first connector (121), the PTC (122), and a portion of the top cover (123) are all located in the accommodating groove (1141), and a sealed portion (130) is provided between a groove wall of the accommodating groove (1141) and each of an outer edge of the second connector (113), an outer edge of the first connector (121), an outer edge of the PTC (122), and an outer edge of the portion of the top cover (123).

10. The top cover assembly of claim 9, wherein a top on one side of the sealed portion (130) facing a central axis of the first through hole (1111) is formed with a limiting groove (131), and an edge portion of the top cover (123) is limited in the limiting groove (131).

11. The top cover assembly of claim 9 or 10, wherein an edge portion of the PTC (122) is inserted into the sealed portion (130).

12. The top cover assembly of claim 9, wherein the insulator (114) comprises a bearing portion (11401) and an intermediate connection portion (11402) that are connected sequentially, the bearing portion (11401) is located on the outer side of the cover plate (111), the accommodating groove (1141) is formed on the bearing portion (11401), and the intermediate connection portion (11402) is located between a hole wall of the first through hole (1111) and the protrusion portion (1122).

13. The top cover assembly of claim 12, wherein the insulator (114) further comprises an inner extension portion (11403), the inner extension portion (11403) is located on the inner side of the cover plate (111) and between the pole body (1121) and the cover plate (111), and the inner extension portion (11403) is connected to one end of the intermediate connection portion (11402) facing away from the bearing portion (11401).

14. The top cover assembly of claim 13, wherein a cross section of the inner extension portion (11403) is L-shaped to form an accommodating groove for accommodating the pole body (1121).

15. The top cover assembly of claim 13, wherein the pole body (1121) is further provided with a first protrusion (11211), and the inner extension portion (11403) is formed with a first slot engaging with the first protrusion (11211).

16. The top cover assembly of claim 15, wherein the first protrusion (11211) is an annular protrusion, and the first slot is an annular slot; or
a plurality of first protrusions (11211) are provided and are spaced apart along a circumferential direction of the pole body (1121), and each of the plurality of first protrusions (11211) corresponds to one respective first slot.

17. The top cover assembly of claim 8, wherein one side of the insulator (114) facing the second connector (113) is provided with a second protrusion (1142), and the second connector (113) is formed with a second slot (1133) engaging with the second protrusion (1142).

18. The top cover assembly of claim 4, wherein the first connector (121) is welded to the second connector (113), the PTC (122) is provided with a first avoidance spot-welding position (1222), the top cover (123) is provided with a second avoidance spot-welding position (1233), and the first avoidance spot-welding position (1222) and the second avoidance spot-welding position (1233) are both directly opposite to a welded position between the first connector (121) and the second connector (113).

19. The top cover assembly of any one of claims 1 to 18, wherein the first connector (121), the PTC (122), and the top cover (123) are welded.

20. The top cover assembly of claim 19, wherein the first connector (121) is provided with a first positioning portion (1211), the PTC (122) is provided with a second positioning portion (1221), the top cover (123) is provided with a third positioning portion (1232), and the first positioning portion (1211), the second positioning portion (1221), and the third positioning portion (1232) are arranged directly opposite to each other.

21. A battery, comprising: a housing (200), a cell (300), and the top cover assembly of any one of claims 1 to 20, wherein the housing (200) is a shell-like structure with an opening at one end, the cell (300) is arranged within the housing (200), the top cover assembly is sealed at the opening of the housing (200), and the pole (112) of the top cover assembly is electrically connected to the tab (301) of the cell (300).
